# EUROPÄISCHE PATENTANMELDUNG

(11) **EP 3 042 761 A1**
(43) Veröffentlichungstag der Anmeldung: **13.07.2016**
(21) Anmeldenummer: 15201014.6
(22) Anmeldetag: 18.12.2015
(51) Int. Cl.: B32B 5/02, B32B 5/22, B32B 5/24, B32B 5/26, B32B 25/10, B32B 25/20, D03D 1/00, D03D 15/00, B60J 7/06, B60J 7/12

(54) **VERDECKSTOFF FÜR CABRIOLET-FAHRZEUGE**

(30) Priorität: 12.01.2015 DE 102015200271
(71) Anmelder: Schmitz-Werke GmbH + Co. KG, 48282 Emsdetten (DE)
(72) Erfinder: Ruholl, Stefan, 48282 Emsdetten (DE); Schmitz, Dan, 48282 Emsdetten (DE)
(74) Vertreter: Rau, Schneck & Hübner Patentanwälte Rechtsanwälte PartGmbB

(57) **Zusammenfassung**

Ein Verdeckstoff für Cabriolet-Fahrzeuge auf Laminatbasis, umfasst
- eine gewebte Oberschicht (2),
- eine gewebte Unterschicht (3), und
- eine zwischen diesen beiden Schichten (2, 3) zur deren Laminierung angeordnete Bindeschicht (4), wobei die Oberschicht (2) und/oder die Unterschicht (3) aus einem Polyester-Gewebe und die Bindeschicht (4) aus einem Silikon-Elastomer bestehen.

## Beschreibung

Die vorliegende Patentanmeldung nimmt die Priorität der deutschen Patentanmeldung DE 10 2015 200 271.3 in Anspruch, deren Inhalt unter Bezugnahme hierin aufgenommen wird.

Die Erfindung betrifft einen Verdeckstoff für Cabriolet-Fahrzeuge mit den im Oberbegriff des Patentanspruches 1 angegebenen Merkmalen.

Diese geben den üblichen Laminat-Aufbau solcher bekannter Verdeckstoffe an. Zwischen einer jeweils gewebten Oberschicht und Unterschicht ist zu deren Laminierung eine Bindeschicht angeordnet.

Herkömmliche Verdeckstoffe weisen als Unter- bzw. Oberschicht Webstoffe aus Polyacrylnitril - PAN - auf, die durch eine Butyl-Kautschuk-Bindeschicht miteinander zu dem Laminat verbunden sind.

Aus der DE 10 2013 000 929 A1 ist ein Stoffverdeck für einen offenen Pkw bekannt, bei dem neben einer Lage aus einem äußeren Verdeckstoff in Form eines Laminats mit einer solchen Butyl-Bindeschicht weitere Zwischenlagen in Form von Polstermatten und eine Dachhimmellage vorgesehen sind.

Die DE 10 2010 047 857 A1 und die DE 93 04 666 U1 offenbaren dreischichtige Verdeckstoff, bei denen die äußeren Gewebeschichten beispielsweise aus Polyesterfasern oder einer Polyacryl/Polyester-Mischung bestehen. Diese beiden Schichten sind durch eine Butyl- oder Chloropren-Schicht miteinander verbunden.

Die AT 512 370 A1 zeigt ein textiles Flächengebilde mit Farbeffekt, bei dem Stoffbahnen aus PAN-Multifilamenten durch eine Gummischicht als Zwischenlage unter Verwendung eines Klebstoffes verbunden sind.

Aus der DE 10 2008 064 257 A1 ist eine Cabriolet-Fahrzeug mit einer gegenüber einer Außenhaut weiter innen liegenden zusätzlichen Lage des Daches bekannt.

Die DE 2 049 978 A1 offenbart ein Verfahren zur Herstellung eines porösen Schichtstoffes, der aufgrund seiner Porosität offensichtlich für Cabriolet-Verdeckstoff nicht geeignet ist.

Eine Faltdachanordnung eines Kraftfahrzeuges mit integrierten Solarmodulen erschließt sich aus der DE 10 2010 026 221.

Zum Hintergrund der Erfindung ist festzuhalten, dass Verdeckstoffe für offene Pkw sehr vielschichtigen Beanspruchungen ausgesetzt sind. Zum einen sind dies jedwede Wettereinflüsse, wie starke Sonneneinstrahlung, Regen und Frost. Darüber hinaus wird der Stoff durch fahrtbedingte Einflüsse, wie Fahrtwind beaufschlagt. Hohe mechanische Einflusskräfte aufgrund des Öffnens, Schließens, Faltens und Spannens des Verdecks sind ebenfalls zu beherrschen. Das Verdeck selbst soll möglichst leichtgewichtig sein und Komfortanforderungen wie beispielsweise einer hohen Wärme- und Schalldämmfähigkeit genügen. Schließlich sind Anforderungen an den Umweltschutz bei der Produktion und im Gebrauch des Verdeckstoffs zu beachten.

Insoweit besteht also die grundsätzliche Aufgabe, einen Verdeckstoff für Cabriolet-Fahrzeuge so zu verbessern, dass die vielschichtigen Problemstellungen möglichst umfassend gelöst werden.

Ein Grundansatz für die Lösung dieser Aufgabe ist durch die Ausgestaltung des Verdeckstoffs gemäß Kennzeichnungsteil des Anspruches 1 gegeben, wonach die Oberschicht und/oder die Unterschicht des Verdeckstoffs aus einem Polyester (PES)-Gewebe und die Bindeschicht aus einem Silikon-Elastomer bestehen.

Als Besonderheiten dieses erfindungsgemäßen Laminates sind zu nennen:
- eine nahezu untrennbare Verbindung der Ober- und Unterschicht
- eine definierte, einstellbare Gewebedicke
- ein eng faltbares Laminat
- bisher nicht erreichtes rückstellelastisches Verhalten
- extremste Kälteflexibilität
- eine Eliminierung der bleibenden Dehnung

In den abhängigen Ansprüchen sind bevorzugte Weiterbildungen des erfindungsgemäßen Verdeckstoffs angegeben. So können die Fasern für die Ober- und/oder Unterschicht spinndüsen- oder nassgefärbt sein.

Die Flächengewichte für die Gewebe der Ober- und/oder Unterschicht liegen im Bereich von 200 g/m² bis 350 g/m², vorzugsweise für die Oberschicht bei 280 g/m² bis 320 g/m² und für die Unterschicht bei 220 g/m² bis 250 g/m².

Weiterhin kann das Gewebe der Oberschicht in Kette und Schuss eine Feinheit von 650 dtex bis 700 dtex, vorzugsweise von 670 dtex aufweisen. Bevorzugte Werte für den Zwirn des Gewebes der Unterschicht in Kette und Schuss liegen bei einer Nummerierung von Nm 40/2.

Für die Ober- und Unterschicht sind verschiedene Bindungen möglich, bevorzugt sind eine Köper- oder Stäbchenmuster-Bindung.

Gemäß einer weiteren bevorzugten Ausführungsformen besteht die Bindeschicht aus einem ausvulkanisierten, hoch vernetzten 2-Komponenten-Silicon-Elastomer, wobei diese dann als akustisch wirksame Schwerschicht ausgelegt sein kann.

Bevorzugte Bereiche für das Flächengewicht des Gesamt-Laminatverbundes des Verdeckstoffs liegen von 800 g/m² bis 1600 g/m², vorzugsweise von 900 g/m² bis 1500 g/m², besonders bevorzugt von 990 g/m² bis 1340 g/m².

Unter umwelttechnischen Gesichtspunkten ist es vorteilhaft, wenn die Oberschicht, die Bindeschicht und die Unterschicht des Verdeckstoffs jeweils Lösemittel-frei hergestellt sind.

Die Dicke des Verdeckstoffs kann in vorteilhafter Weise durch eine Auslegung der Dicke der Bindeschicht an den Einsatzort des Verdeckstoffs angepasst sein. So kann die Bindeschicht für die Mittelbahn eines Verdeckes zu deren Stabilisierung dicker aufgetragen sein, wogegen eine dünnere Mittelschicht in den Seitenbahnen des Verdecks dessen Flexibilität und damit Faltbarkeit verbessert.

Die Vorteile des erfindungsgemäßen Verdeckstoffes sind nochmals wie folgt zusammenzufassen:
- Keinerlei Verwendung von Lösemitteln
   ∘ weder bei der Faserherstellung noch beim Aufbringen des 2-Komponenten-Silikons
   ∘ kein Einsatz von Stoffen der Kandidatenliste REACh
- Kein Ausdiffundieren von Silikonen
   ∘ Niedrigste FOC-Werte im Vergleich zu aktuell eingesetzten Laminaten
- PES-Gewebe haben verbesserte mechanische Eigenschaften
   ∘ Höhere Höchstzugkraft
   ∘ Höhere Weiterreißfestigkeit
   ∘ Geringe bleibende Dehnung
   ∘ Hervorragendes Erholungsvermögen auch nach dauerhafter Knickbeanspnichung
- Zusammenspiel von Silikon und PES verbessern das Rückstellvermögen des Verdeckstoffes insgesamt
   ∘ Im Gegensatz zu PAN ist PES ein thermoplastischer Werkstoff mit reaktiven Gruppen, der mit dem Silikon-Elastomer kovalente Bindungen eingehen kann
   ∘ Verbindung zwischen Bindeschicht und Ober- bzw. Unterschicht ist durch das Zusammenspiel von Adhäsion und kovalenten Bindungen so stark, dass ein Trennen der Lagen nicht möglich ist.
   ∘ Temperaturbeständigkeit des Silikon-Elastomers liegt bei -60 °C bis +220°C
- Bei gleicher Widerstandskraft dünneres Gewebe, was sich vorteilhaft auf den Aufbau des Gesamtverdecks auswirkt
- Geringerer Aufbau führt zu längerer Haltbarkeit insgesamt
- Silikon in Zusammenwirkung mit PES-Tuch ist individuell auf Kundenwünsche einstellbar insbesondere Verbundstärke
   ∘ Im ersten Schritt gleichmäßiger Auftrag, als nächste Entwicklungsstufe zur Bahnmitte dickerer Auftrag zur Stabilisierung der Mittelbahn denkbar. Dünnerer Auftrag zu den Seitenbahnen hin würde deren Flexibilität und Faltbarkeit verbessern
- Geringere Haarigkeit der Gewebeoberfläche führt zu geringerer Anschmutzung (PES ist weniger spröde als PAN)
- Höhere Abschirmung des Fahrzeuginnenraumes gegen Fahrgeräusche

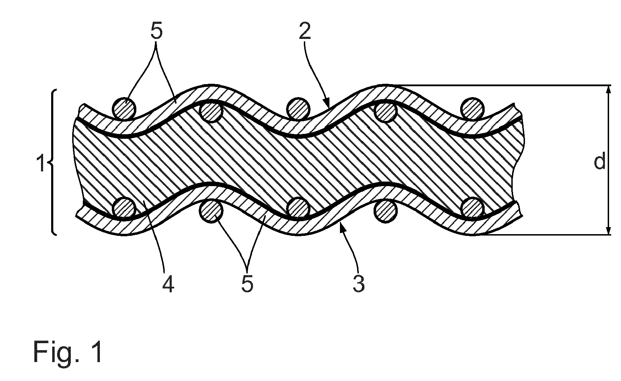

Weitere Merkmale, Einzelheiten und Vorteile der Erfindung ergeben sich aus der nachfolgenden Beschreibung eines Ausführungsbeispiels anhand der beigefügten Zeichnung. Diese
- **Figur 1**: zeigt einen schematischen Schnitt durch ein Verdeckstoff-Laminat.

Wie aus der Figur 1 entnehmbar ist, besteht der Verdeckstoff 1 aus einer gewebten Oberschicht 2, einer ebenfalls gewebten Unterschicht 3 und einer dazwischen angeordneten Bindeschicht 4 zur Laminierung der beiden Schichten 2, 3. Ober- und Unterschicht 2, 3 bestehen aus Polyester-Geweben, deren Fasern 5 wahlweise spinndüsen- oder nass gefärbt sein können. Die äußere Oberschicht 2 weist beispielsweise eine Fadenstärke von 670 dtex in Kette und Schuss auf, das Flächengewicht des Gewebes beträgt 303 g/m².

Die innen liegende Unterschicht 3 des Verdeckstoffs basiert auf einem Polyester-Zwirn mit der Nummerierung Nm 40/2 in Kette und Schuss, weist eine Stäbchenmuster- oder Köperbindung auf und hat einen Flächengewicht von ca. 235 g/m².

Die Weiterreißfestigkeit der vorgenannten Polyester-Gewebe beträgt beispielsweise 156 N in Kette und 226 N in Schuss. Die bleibende Dehnung liegt beispielsweise bei 0,017% in Kettrichtung und 0,1 % in Schussrichtung.

Bei der Herstellung des Verdeckstoffes 1 wird auf eine der beiden Schichten 2, 3 die Bindeschicht 4 in Form einer Beschichtung aufgetragen und die zweite Schicht aufgebracht. Durch ein Hochvernetzen und damit Ausvulkanisieren des 2-Komponenten- Silikons wird über entsprechende Bindungen zu den Schichten 2 und 3 ein inniger und untrennbarer Laminatverbund geschaffen. Dessen Dicke d kann bei einem Verdeckstoff, der für die Mittelbahn eines Cabriolet-Verdecks bestimmt ist, größer sein, als bei einem Verdeckstoff, der in der Seitenbahn des Verdecks zum Einsatz kommt. Dort ist eine bessere Faltbarkeit und geringere Aufbauhöhe von Vorteil.

## Patentansprüche

1. Verdeckstoff für Cabriolet-Fahrzeuge auf Laminatbasis, umfassend
- eine gewebte Oberschicht (2),
- eine gewebte Unterschicht (3), und
- eine zwischen diesen beiden Schichten (2, 3) zur deren Laminierung angeordnete Bindeschicht (4),
**dadurch gekennzeichnet, dass**
- die Oberschicht (2) und/oder die Unterschicht (3) aus einem Polyester-Gewebe und die Bindeschicht (4) aus einem Silikon-Elastomer bestehen.

2. Verdeckstoff nach Anspruch 1, **dadurch gekennzeichnet, dass** die Fasern (5) für die Ober- und/oder Unterschicht (2, 3) spinndüsen- oder nassgefärbt sind.

3. Verdeckstoff nach Anspruch 1 oder 2, **dadurch gekennzeichnet, dass** das Gewebe der Ober- und/oder Unterschicht (2, 3) ein Flächengewicht im Bereich von 200 g/m² bis 350 g/m², vorzugsweise ein Flächengewicht für die Oberschicht (2) von 280 g/m² bis 320 g/m² und für die Unterschicht (3) von 220 g/m² bis 250 g/m² aufweist.

4. Verdeckstoff nach einem der vorgenannten Ansprüche, **dadurch gekennzeichnet, dass** das Gewebe der Oberschicht (2) in Kette und Schuss eine Feinheit von 650 dtex bis 700 dtex, vorzugsweise von 670 dtex aufweist.

5. Verdeckstoff nach einem der vorgenannten Ansprüche, **dadurch gekennzeichnet, dass** der Zwirn des Gewebes der Unterschicht (3) in Kette und Schuss eine Nummerierung von Nm 40/2 aufweist.

6. Verdeckstoff nach einem der vorgenannten Ansprüche, **dadurch gekennzeichnet, dass** das Gewebe der Unterschicht (3) in einer Stäbchenmuster- oder Köper-Bindung gewebt ist.

7. Verdeckstoff nach einem der vorgenannten Ansprüche, **dadurch gekennzeichnet, dass** die Bindeschicht (4) aus einem ausvulkanisierten, hoch vernetzten 2-Komponenten-Silicon-Elastomer besteht.

8. Verdeckstoff nach einem der vorgenannten Ansprüche, **dadurch gekennzeichnet, dass** die Bindeschicht (4) als akustisch wirksame Schwerschicht ausgelegt ist.

9. Verdeckstoff nach einem der vorgenannten Ansprüche, **dadurch gekennzeichnet, dass** der Verdeckstoff mit seinem Gesamt-Laminatverbund ein Flächengewicht im Bereich von 800 g/m² bis 1600 g/m², vorzugsweise von 900 g/m² bis 1500 g/m², besonders bevorzugt von 990 g/m² bis 1340 g/m² aufweist.

10. Verdeckstoff nach einem der vorgenannten Ansprüche, **dadurch gekennzeichnet, dass** die Oberschicht (2), die Bindeschicht (4) und die Unterschicht (3) jeweils Lösemittel-frei hergestellt sind.

11. Verdeckstoff nach einem der vorgenannten Ansprüche, **dadurch gekennzeichnet, dass** die Dicke (d) des Verdeckstoffs durch eine Auslegung der Dicke der Bindeschicht (4) an den Einsatzort des Verdeckstoffs angepasst ist.
